# FASCICULE DE BREVET EUROPEEN

(11) **EP 3 770 805 B1**
(45) Date de publication et mention de la délivrance du brevet: **03.09.2025**
(21) Numéro de dépôt: 20186813.0
(22) Date de dépôt: 20.07.2020
(51) Int. Cl.: G06V 40/10, G06V 20/40, G06V 10/82, G06V 20/62

(54) **PROCEDE D'IDENTIFICATION D'UNE PERSONNE DANS UNE VIDEO, PAR UNE SIGNATURE VISUELLE DE CETTE PERSONNE, PROGRAMME D'ORDINATEUR ET DISPOSITIF CORRESPONDANTS**
VERFAHREN ZUR IDENTIFIZIERUNG EINER PERSON IN EINEM VIDEO DURCH EINE GESICHTSSIGNATUR DIESER PERSON, ENTSPRECHENDES COMPUTERPROGRAMMM UND ENTSPRECHENDE VORRICHTUNG
METHOD FOR IDENTIFYING A PERSON IN A VIDEO, BY A VISUAL SIGNATURE OF SAID PERSON, CORRESPONDING DEVICE AND COMPUTER PROGRAM

(30) Priorité: 22.07.2019 FR 1908292
(43) Date de publication de la demande: 27.01.2021
(73) Titulaire: Bull SAS, 78340 Les Clayes-sous-Bois (FR)
(72) Inventeur: DRUIHLE, Rémi, 38400 Saint-Martin-d'Hères (FR); BOUKAMEL-DONNOU, Cécile, 38130 Échirolles (FR); PELLETIER, Benoit, 38960 Saint-Étienne-de-Crossey (FR)
(74) Mandataire: IPAZ

(56) Documents cités:
- US-B1- 6 545 705
- LORIS BAZZANI ET AL: "Symmetry-driven accumulation of local features for human characterization and re-identification", COMPUTER VISION AND IMAGE UNDERSTANDING., vol. 117, no. 2, 1 February 2013 (2013-02-01), US, pages 130 - 144, XP055694983, ISSN: 1077-3142, DOI: 10.1016/j.cviu.2012.10.008
- KAMLESH ET AL: "Person Re-identification with End-to-End Scene Text Recognition", CCCV 2017: CHINESE CONFERENCE ON COMPUTER VISION, TIANJIN, CHINA, OCTOBER 11-14, 201, SPRINGER, 1 January 2017 (2017-01-01), pages 363 - 374, XP009520187, ISBN: 978-981-10-7304-5, DOI: 10.1007/978-981-10-7305-2_32
- PRIADI TEGUH WIBOWO: "Automatic Running Event Visualization using Video from Multiple Camera", 27 June 2019 (2019-06-27), pages 1 - 37, XP055692764, Retrieved from the Internet <URL:https://pdfs.semanticscholar.org/36c0/07c340c3215b64f505fc7567a92174e9ae39.pdf> [retrieved on 20200507]

## Description

La présente invention concerne un procédé d'identification d'une personne dans une vidéo, par une signature visuelle de cette personne, ainsi qu'un programme d'ordinateur et un dispositif correspondants.

L'invention s'applique par exemple à l'identification de participants à une activité sportive, telle qu'une course à pieds ou à vélo.

La demande internationale PCT publiée sous le numéro WO 2010/075430 A1 décrit un procédé d'identification de personne dans une vidéo, et plus précisément dans une image de cette vidéo, par une signature visuelle de cette personne, comportant :
- la recherche d'au moins une personne présente dans l'image ; et
- la détermination d'une signature visuelle de la personne.

Le document WO 2010/075430 A1 propose d'utiliser la signature visuelle lorsqu'il n'est pas possible de reconnaitre un numéro porté par la personne. Ainsi, il est proposé de comparer la signature visuelle de l'image en cours avec la signature visuelle d'une autre image de la personne, dans laquelle un numéro d'identification porté par la personne a été préalablement reconnu.

Cependant, dans le document WO 2010/075430 A1, le rapprochement entre plusieurs images de la même personne est réalisé en comparant des images isolées, et ne profite donc pas des similarités entre des images successives d'une vidéo.

Par ailleurs, la demande de brevet US publiée sous le numéro US 2018/0107877 A1 décrit un procédé d'identification de personne dans une pluralité d'images, par une signature visuelle de cette personne. Plus précisément, le document US 2018/0107877 A1 propose d'utiliser la signature visuelle lorsqu'il n'est pas possible, dans certaines de la pluralité d'images, de reconnaitre un numéro porté par la personne. Ainsi, il est proposé de comparer la signature visuelle de chacune de ces images avec la signature visuelle d'une autre image de la pluralité, dans laquelle un numéro d'identification porté par la personne a été reconnu.

Cependant, comme dans le document WO 2010/075430 A1, le rapprochement entre plusieurs images de la même personne est réalisé en comparant des images isolées, et ne profite donc pas des similarités entre des images successives d'une vidéo. Le même problème se pose avec les techniques décrites dans les documents suivants : Bazzani, « Symmetry-driven accumulation of local features for human characterization and re-identification », Computer Vision and Image Understanding, vol. 117, nr. 2, 2013 p. 117-144 ; Kamlesh, « Person Re-identification with End-to-End Scene Text Recognition », Chinese Conf. on Computer Vision, 2017, p. 363-374 ; Wibowo, « Automatic Running Event Visualization using Video from Multiple Camera », 2020 ; US6545705.

Il peut ainsi être souhaité de prévoir un procédé d'identification de personne dans une vidéo, par une signature visuelle de cette personne, qui permette de s'affranchir d'au moins une partie des problèmes et contraintes précités.

L'invention a donc pour objet un procédé d'identification d'une personne dans une vidéo, par une signature visuelle de cette personne, tel que défini par la revendication 1.

Ainsi, grâce à l'invention, le fait de considérer plusieurs zones de personnes pour dériver une unique signature visuelle, permet d'utiliser de manière très efficace les similitudes entre les images successives de la vidéo, ce qui permet d'améliorer la qualité de la reconnaissance de cette personne.

D'autres caractéristiques optionnelles du procédé objet de l'invention sont définies dans les revendications dépendantes.

L'invention a également pour objet un programme d'ordinateur téléchargeable depuis un réseau de communication et/ou enregistré sur un support lisible par ordinateur et/ou exécutable par un processeur, caractérisé en ce qu'il comprend des instructions pour l'exécution des étapes d'un procédé selon l'invention, lorsque ledit programme est exécuté sur un ordinateur.

L'invention a également pour objet un dispositif d'identification d'une personne dans une vidéo, par une signature visuelle de cette personne, tel que défini par la revendication 10.

L'invention sera mieux comprise à l'aide de la description qui va suivre, donnée uniquement à titre d'exemple et faite en se référant aux dessins annexés dans lesquels :
[Fig.1] la figure 1 représente schématiquement la structure générale d'une infrastructure de course à pied dans laquelle l'invention est mise en œuvre,
[Fig.2] la figure 2 représente schématiquement la structure générale d'un dispositif d'identification de personne de l'infrastructure de la figure 1,
[Fig.3] la figure 3 illustre les étapes successives d'un procédé d'identification de personne, selon un mode de réalisation de l'invention,
[Fig.4] la figure 4 représente deux images consécutives d'un flux vidéo d'une caméra de l'infrastructure de la figure 1,
[Fig.5] la figure 5 représente des zones de personne définies dans les deux images de la figure 4,
[Fig.6] la figure 6 représente des segments de courses obtenus à partir des zones de personne de la figure 5,
[Fig.7] la figure 7 représente des zones de numéro définies dans les zones de personne de la figure 6,
[Fig.8] la figure 8 représente des résultats de reconnaissance de numéros présents dans les zones de numéros de la figure 7,
[Fig.9] la figure 9 représente différentes lignes de division des images,
[Fig.10] la figure 10 illustre la détermination d'une zone de personne franchissant une des lignes de la figure 9 ayant été sélectionnée, et
[Fig.11] la figure 11 illustre les deux images de la figure 4 après modification.

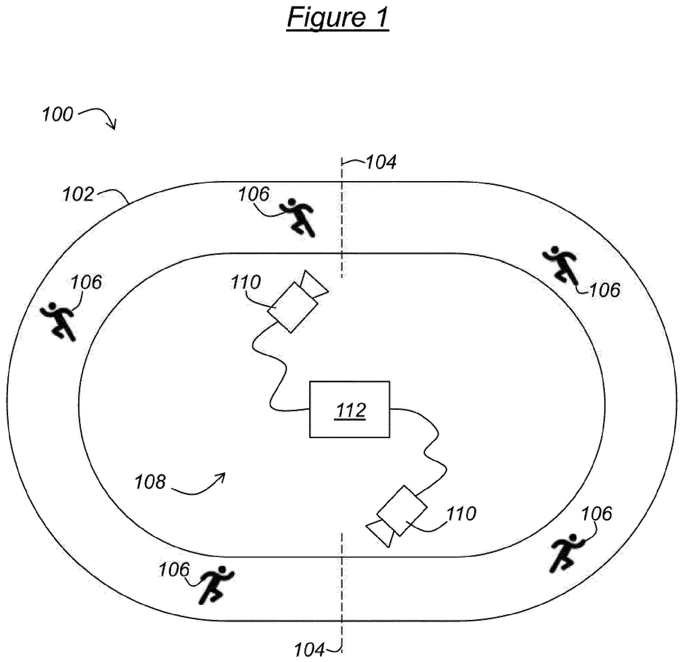

En référence à la figure 1, une infrastructure 100 de course à pieds mettant en œuvre l'invention va à présent être décrite.

L'infrastructure 100 comporte tout d'abord un parcours 102 destiné à être parcouru par des participants 106 à une course, par exemple une course à pieds. Une ou plusieurs lignes de passage 104 sont réparties de long du parcours 102 de manière à être franchies par les participants 106, par exemple afin d'obtenir des temps intermédiaires de progression dans la course. Chaque ligne de passage 104 est fixe, c'est-à-dire qu'elle est située toujours au même endroit le long du parcours 102, au moins pour la durée de la course. En outre chaque ligne de passage 104 peut être virtuelle, c'est-à-dire qu'elle peut ne pas être matérialisée sur le parcours 102. Chaque ligne de passage 104 est par exemple une ligne droite.

L'infrastructure 100 comporte en outre un système 108 de détection des participants 106 à la course.

Le système 108 comporte tout d'abord une ou plusieurs caméras 110 disposées le long du parcours 102 de manière à respectivement pointer vers la ou les lignes de passage 104, afin de détecter le passage des participants 106 et ainsi suivre leur progression dans la course. Ainsi, chaque caméra 110 est associée à une ligne de passage 104 respective. La ou les caméras 110 sont de préférence fixes, comme la ou les lignes de passage 104. De préférence, chaque caméra est placée en hauteur, par exemple entre deux et trois mètres de hauteur, et orientée en direction des participants, afin de pouvoir voir leur visage et les reconnaitre.

Le système 108 comporte en outre un dispositif 112 de surveillance vidéo du franchissement d'une ligne par des personnes. Le dispositif 112 est connecté à chaque caméra 110, par un réseau de communication filaire ou sans fil. Le dispositif 112 est par exemple un ordinateur, de préférence équipé d'une ou plusieurs cartes graphiques et relié par Ethernet aux caméras 110. Cet ordinateur ne nécessite pas de connexion à Internet.

Dans sa version la plus simple, le système 108 comporte une seule caméra pointant vers une unique ligne de passage 104. Cette dernière peut être franchie plusieurs fois par les participants, permettant ainsi de récupérer plusieurs temps intermédiaires à différents kilométrages de la course. Dans ce cas, le parcours 102 doit être fermé (en boucle ou en huit) et parcouru plusieurs fois par les participants, afin qu'ils passent plusieurs fois la ligne de passage 104.

Une version plus avancée inclut la mise en place d'un réseau haut débit sans fil entre, d'une part, les caméras 110, réparties sur plusieurs lignes de passage, et, d'autre part, l'ordinateur en charge du traitement des données. Le transfert des données se fait alors au travers d'un réseau sans fil haut débit à longue portée comme le WiMAX (-10-30 km) ou en utilisant des technologies WiFi longue portée (-2-10 km).

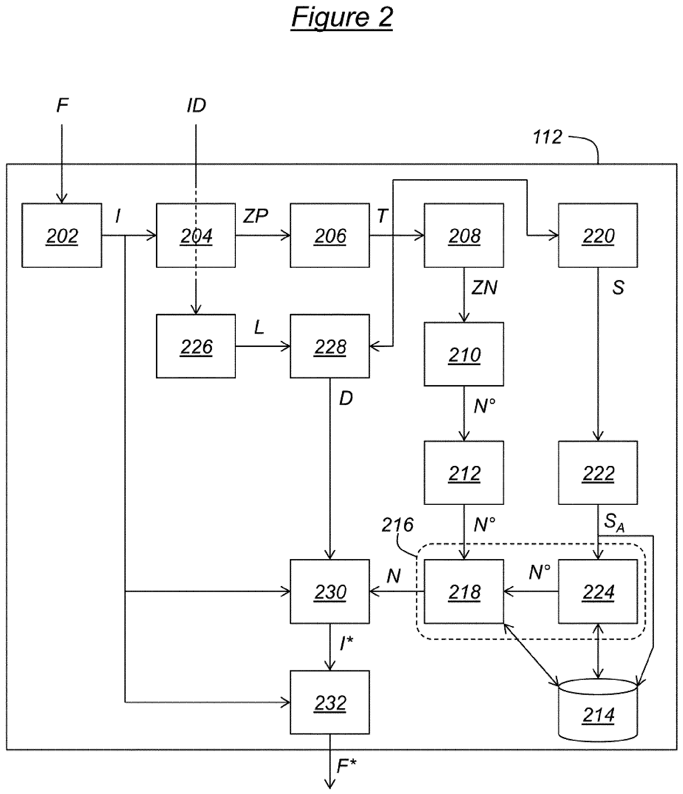

En référence à la figure 2, le dispositif 112 va à présent être décrit plus en détail.

Le dispositif 112 comporte tout d'abord des moyens de conversion vidéo 202 conçus pour recevoir le flux vidéo F de chaque caméra 110 et pour convertir ce flux vidéo F en une suite d'images I successives. Les images I sont respectivement associées aux instants (date et/ou heure) auxquels elles ont été converties. Chaque flux vidéo F est par exemple au format RTSP (de l'anglais « Real Time Streaming Protocol »).

Le dispositif 112 comporte en outre des moyens de localisation de personne 204 conçus, pour chacune des images I successives du flux vidéo F de chaque caméra 110, pour rechercher au moins une personne présente dans l'image I et définir, dans l'image I, pour chaque personne trouvée, une zone, dite zone de personne ZP, entourant au moins en partie cette personne. Chaque zone de personne ZP présente ainsi une certaine position dans l'image I. Dans l'exemple décrit, chaque zone de personne ZP est un cadre rectangulaire entourant la personne et la position de ce cadre dans l'image I est par exemple définie par la position d'un de ses coins. Dans l'exemple décrit, les moyens de localisation de personne 204 comportent un réseau de neurones, par exemple un réseau de neurones convolutionnel de type détecteur à plusieurs cadres en une seule fois (de l'anglais « Single Shot Multibox Detector » ou SSD). Dans l'exemple décrit, le réseau de neurones a été préalablement entraîné pour détecter plusieurs cibles, par exemple : piéton, deux roues, automobile, camion, autre. Dans le cadre de la présente invention, seule la détection de piétons est utilisée.

Le dispositif 112 comporte en outre des moyens de construction de segments de course 206 conçus, pour chacune d'au moins une personne trouvée, pour regrouper, en un segment de course (de l'anglais « tracklet »), plusieurs zones de personne ZP issues d'images I successives et entourant au moins en partie la même personne.

Le dispositif 112 comporte en outre des moyens conçus, pour chaque segment de course T, pour identifier la personne de ce segment de course T à partir des zones de personne ZP de ce segment de course T. Ces moyens comportent les moyens 208 à 224 suivants.

Ainsi, le dispositif 112 comporte des moyens de localisation de numéro 208 (de l'anglais « Rib Number Detection » ou RBN Detection) conçus, pour chaque zone de personne ZP du segment de course T, pour rechercher au moins un numéro présent dans la zone de personne ZP et définir, dans la zone de personne ZP, pour chaque numéro trouvé, une zone, dite zone de numéro ZN, entourant ce numéro. Dans l'exemple décrit, la zone de numéro ZN est un cadre rectangulaire entourant le numéro. Dans la présente invention, le terme « numéro » englobe toute suite de caractères et n'est donc pas limité aux seules suites de chiffres. Dans l'exemple décrit, les moyens de localisation de numéro 208 comportent un réseau de neurones, par exemple un réseau de neurones profond (de l'anglais « Deep Neural Network » ou DNN), préalablement entraîné pour réaliser les tâches ci-dessus. Par exemple, le réseau de neurones est celui décrit dans le projet SSD-tensorflow avec les hyperparamètres du Tableau 1 suivant :

**[Tableau 1]**

| |
|---|
| CUDA_VISIBLE_DEVICES=0,1,2,3 setsid python Textbox_train.py \ |
| --train_dir=${TRAIN_DIR} \ |
| --dataset_dir=${DATASET_DIR} \ |
| --save_summaries_secs=60 \ |
| --save_interval_secs=1800 \ |
| --weight_decay=0.0005 \ |
| --optimizer=momentum \ |
| --learning_rate=0.001 \ |
| --batch_size=8 \ |
| --num_samples=800000 \ |
| --gpu_memory_fraction=0.95 \ |
| --max_number_of_steps=500000 \ |
| --use_batch=False \ |
| --num_clones=4 \ |

Le dispositif 112 comporte en outre des moyens de reconnaissance de numéro 210 (de l'anglais « Rib Number Recognition » ou RBN Recognition) conçus, pour chaque zone de numéro ZN du segment de course T, pour reconnaître le numéro N° présent dans la zone de numéro ZN. Les moyens de reconnaissance de numéro 210 sont en outre conçus, pour chaque numéro N° reconnu, pour évaluer une fiabilité (également appelée « confiance ») de la reconnaissance. Dans l'exemple décrit, les moyens de reconnaissance de numéro 210 comportent un réseau de neurones, par exemple un réseau de neurones profond, préalablement entraîné pour réaliser les tâches précédentes. Par exemple, le réseau de neurones est celui du modèle CRNN_Tensorflow tel que décrit dans l'article de Baoguang Shi et al. intitulé « An End-to-End Trainable Neural Network for Image-based Sequence Recognition and Its Application to Scene Text Recognition » et publié le 21 juillet 2015 sur arXiv.org (https://arxiv.org/abs/1507.05717).

Le dispositif 112 comporte en outre des moyens de sélection de numéro 212 conçus pour sélectionner l'un des numéros N° reconnus à partir des fiabilités de ces numéros N° reconnus.

Dans l'exemple décrit, les moyens de sélection de numéro 212 sont tout d'abord conçus pour filtrer chaque numéro N° dont la fiabilité est inférieure à un seuil prédéfini. Ainsi, seuls les numéros N° dont la fiabilité est supérieure au seuil, dits numéros fiables, sont gardés. Les moyens de sélection de numéro 212 sont en outre conçus pour sélectionner l'un des numéros N° fiables à partir de leurs fiabilités associées. Concernant cette dernière sélection, les moyens de sélection de numéro 212 sont par exemple conçus pour déterminer, parmi les valeurs des numéros N° fiables, celle dont une combinaison, comme la somme ou bien la moyenne, des fiabilités des numéros ayant cette valeur est la plus élevée. Le numéro N° sélectionné par les moyens de sélection de numéro 212 est alors celui ayant cette valeur déterminée.

Le dispositif 112 comporte en outre une base de données 214 comportant un ensemble de numéros d'identification prédéfinis identifiant des personnes respectives. Par exemple, dans cette base de données 214, des noms N des participants 106 à la course sont respectivement associés à des numéros d'identification. Un exemple de base de données 214 est illustré dans le tableau suivant :

**[Tableau 2]**

| Nom (N) | Numéro d'identification |
|---|---|
| Alice | 4523 |
| Bob | 1289 |

La base de données 214 peut en outre associer à chaque personne (Nom/N°) une ou plusieurs signatures visuelles de référence S_{R} représentatives de l'aspect visuel de cette personne. Ces signatures visuelles de référence S_{R} peuvent être enregistrées dans la base de données 214 préalablement à la course et complétées par d'autres signatures visuelles de référence S_{R} lors de la course, comme cela sera expliqué par la suite.

Le dispositif 112 comporte en outre des moyens de récupération de nom 216 comportant un premier module 218 conçu pour rechercher, parmi les numéros d'identification prédéfinis de la base de données 214, le numéro N° sélectionné par les moyens de sélection de numéro 212 et pour récupérer le nom N associé.

Le dispositif 112 comporte en outre des moyens de détermination de signature visuelle 220 conçus, pour chaque zone de personne ZP de chaque segment de course T, pour déterminer une signature visuelle S, dite locale, de la personne présente dans la zone de personne ZP et évaluer une fiabilité (ou « confiance ») de chaque signature visuelle locale S. La signature visuelle locale S de la personne est représentative de son aspect visuel global (ce qui inclut par exemple : la morphologie de la personne, la forme et les couleurs de ses vêtements, etc.). Dans l'exemple décrit, les moyens de détermination de signature visuelle 220 comportent un réseau de neurones, par exemple un réseau de neurones profond, préalablement entraîné pour réaliser les tâches précédentes. Par exemple, le réseau de neurones est le réseau ResNet 50. De préférence, le réseau de neurones est préalablement entraîné à partir d'images de personnes dans au moins certaines desquelles le visage de la personne n'est pas visible. Ainsi, le réseau de neurones apprend bien à reconnaitre une personne sur la base de son aspect visuel global, et non à partir de l'aspect visuel de son visage.

Le dispositif 112 comporte en outre des moyens de détermination de signature visuelle agrégée 222 conçus, pour chaque segment de course T, pour déterminer une signature visuelle agrégée S_{A} à partir des signatures visuelles locales S de la personne des zones de personne ZP du segment de course T et de leurs fiabilités associées. Par exemple, la signature visuelle agrégée S_{A} est une moyenne des signatures visuelles locales S de la personne des zones de personne ZP du segment de course T, pondérée par les fiabilités respectives de ces signatures visuelles locales S.

Les moyens de détermination de signature visuelle agrégée 222 sont en outre conçus pour vérifier si la personne du segment de course T a pu être identifiée par un numéro d'identification porté par cette personne, par les moyens précédemment décrits .

Dans ce cas, les moyens de détermination de signature visuelle agrégée 222 sont en outre conçus pour enregistrer la signature visuelle agrégée S_{A} dans la base de données 214 et pour l'associer au numéro d'identification trouvé (et donc également au nom N associé à ce numéro d'identification). La signature visuelle agrégée S_{A} devient ainsi une signature de référence S_{R} pour la personne ayant ce nom N et identifiée par ce numéro d'identification.

Sinon, en particulier si les fiabilités des numéros N° évaluées par les moyens de reconnaissance de numéro 210 sont toutes inférieures au seuil prédéfini des moyens de sélection de numéro 212, les moyens de détermination de signature visuelle agrégée 222 sont conçus pour fournir cette signature agrégée S_{A} aux moyens de récupération de nom 216. Ces derniers comportent en effet, en outre du premier module 218, un deuxième module 224 conçus pour déterminer, dans la base de données 214, le numéro d'identification associé à une ou plusieurs signatures visuelles de référence S_{R} présentant une distance (par exemple, une distance euclidienne) par rapport à la signature visuelle agrégée S_{A} inférieure à un seuil prédéfini. Le deuxième module 214 est en outre conçu pour enregistrer la signature visuelle agrégée S_{A} dans la base de données 214 et pour l'associer au numéro d'identification trouvé (et donc également au nom N associé à ce numéro d'identification). La signature visuelle agrégée S_{A} devient ainsi une signature de référence S_{R} pour la personne ayant ce nom N et identifiée par ce numéro d'identification. Le deuxième module 224 est en outre conçu pour fournir le numéro d'identification déterminé au premier module 218, afin que ce dernier récupère le nom N associé à ce numéro d'identification.

Le dispositif 112 comporte en outre des moyens de sélection de ligne 226 conçus pour recevoir, avec chaque flux vidéo F reçu, un identifiant ID de la caméra 110 envoyant ce flux vidéo F et sélectionner une ligne L représentant la ligne de passage 104 associée à la caméra 110 ayant cet identifiant de caméra ID. Chaque ligne L a une position fixe et prédéfinie dans les images I fournies par cette caméra 110. Les lignes L sont par exemple des lignes droites et/ou divisent en deux chaque image I : une partie amont par laquelle les participants 106 à la course sont destinés à arriver dans les images I et une partie aval par laquelle les participants 106 sont destinés à sortir des images I.

Le dispositif 112 comporte en outre des moyens de détection de franchissement 228 conçus tout d'abord pour déterminer, pour chaque segment de course T, parmi les zones de personne ZP du segment de course T, celle franchissant la première, dans un sens prédéfini, la ligne L sélectionnée par les moyens de sélection de ligne 226. Par exemple, lorsque la ligne L divise en deux parties chaque image I, les moyens de détection de franchissement 228 sont conçus, pour chaque segment de course T, pour déterminer la zone de personne ZP s'étendant au moins en partie dans la partie aval, tandis que toutes les zones de personnes ZP précédentes s'étendaient dans la partie amont.

Les moyens de détection de franchissement 228 sont en outre conçus pour déterminer un instant D de franchissement de la ligne L à partir d'un instant associé à l'image I contenant la zone de personne ZP franchissant la première la ligne. Cet instant de franchissement D est par exemple l'instant de conversion associé à chaque image par les moyens de conversion vidéo 202.

Le dispositif 112 comporte en outre des moyens de modification d'image 230 conçus pour ajouter le nom N fourni par les moyens de récupération de nom 216 et l'instant de franchissement D fourni par les moyens de détection de franchissement 228 dans au moins une partie des images I contenant les zones de personne ZP formant le segment de course T à partir duquel ce nom N et cet instant de franchissement D ont été déterminés. Ces informations N, D sont par exemple ajoutées aux images I de manière à obtenir des images modifiées I* dans lesquelles les informations N, D suivent la zone de personne ZP. Cela permet de mettre en œuvre de la réalité augmentée.

Le dispositif 112 comporte en outre des moyens de reconstitution de flux vidéo 232 conçus pour construire un flux vidéo reconstitué F* à partir des images modifiées I* par les moyens de modification d'image 230 et des images I non modifiées du flux vidéo F d'origine (par exemple pour les moments où aucun participant 106 ne passe devant la caméra 110).

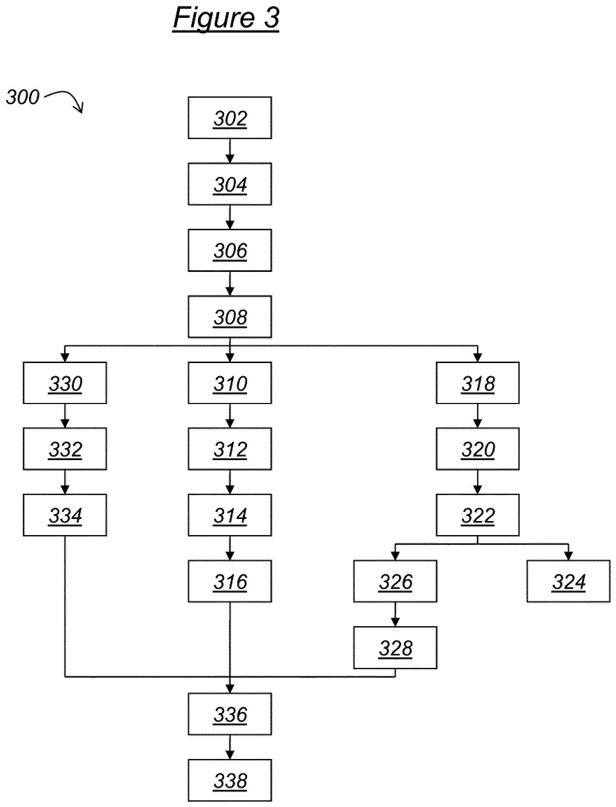

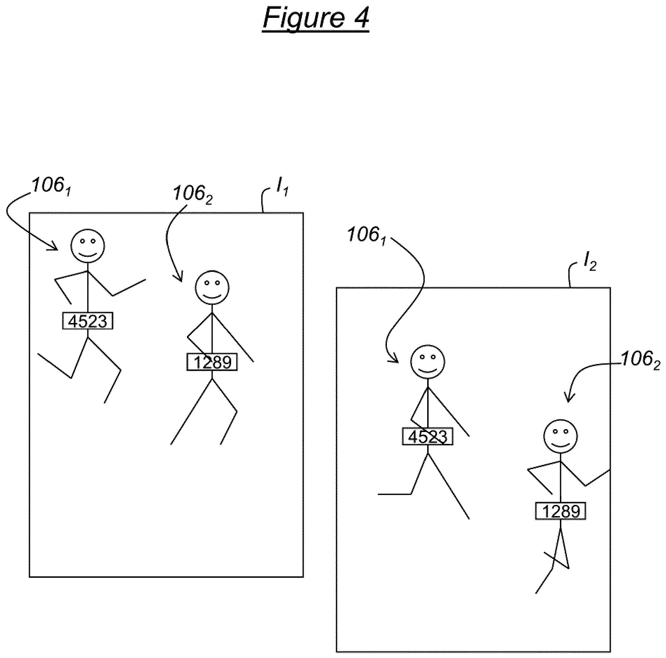

En référence aux figures 3 à 11, un procédé 300 de surveillance vidéo du franchissement de chaque ligne de passage 104 va à présent être décrit. Lors de cette description, un exemple concret sera développé, dont certains résultats sont illustrés sur les figures 4 à 11.

Au cours d'une étape 302, chaque caméra 110 fournit un flux vidéo F au dispositif 112.

Au cours d'une étape 304, les moyens de conversion vidéo 202 reçoivent le flux vidéo F de chaque caméra 110 et convertissent ce flux vidéo F en une suite d'images I successives. Les moyens de conversion vidéo 202 associent en outre les images I aux instants respectifs auxquels elles ont été converties.

En référence à la figure 4, dans l'exemple développé, deux images I₁, I₂ successives obtenues à l'issue de l'étape 304 sont illustrées. Deux participants 106₁, 106₂ à la course sont visibles sur ces images I₁, I₂.

De retour à la figure 3, au cours d'une étape 306, pour chacune des images I du flux vidéo de chaque caméra 110, les moyens de localisation de personne 204 recherchent au moins une personne présente dans l'image I et définissent, dans l'image I, pour chaque personne trouvée, une zone de personne ZP entourant au moins en partie cette personne. Ainsi, chaque zone de personne ZP définit, d'une part, une sous-image (le contenu de la zone de personne ZP, c'est-à-dire la partie de l'image I contenue dans la zone de personne ZP) et occupe, d'autre part, une certaine place dans l'image I (en particulier une position dans l'image).

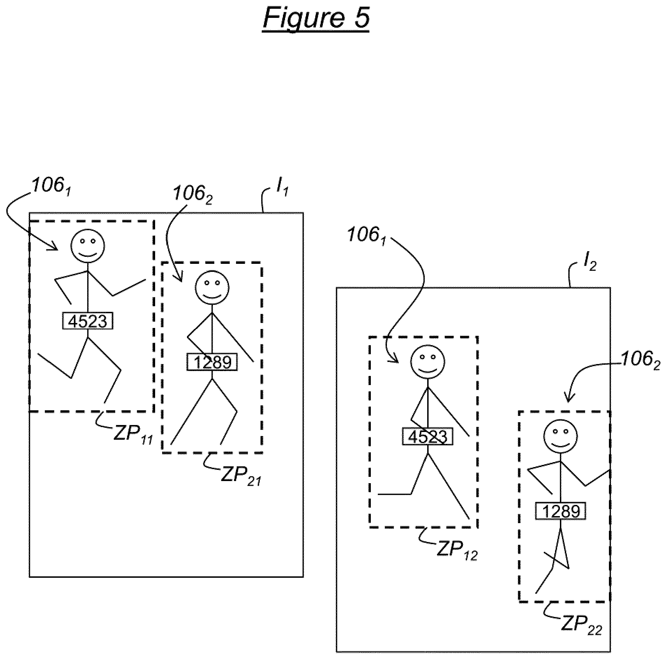

Le résultat de l'étape 306 dans l'exemple développé est illustré sur la figure 5. Plus précisément, pour l'image I₁, les moyens de localisation de personne 204 détectent le premier participant 106₁ et définissent la zone de participant ZP₁₁ autour de lui. En outre, les moyens de localisation de personne 204 détectent le deuxième participant 106₂ et définissent la zone de participant ZP₁₂ autour de lui. La même chose se produit pour l'image I₂, donnant lieu à la zone de participant ZP₂₁ entourant le premier participant 106₁ et à la zone de participant ZP₂₂ entourant le deuxième participant 106₂.

De retour à la figure 3, au cours d'une étape 308, pour chacune d'au moins une personne trouvée, les moyens de construction de segments de course 206 regroupent, en un segment de course T, plusieurs zones de personnes ZP issues d'images I successives et entourant au moins en partie la même personne.

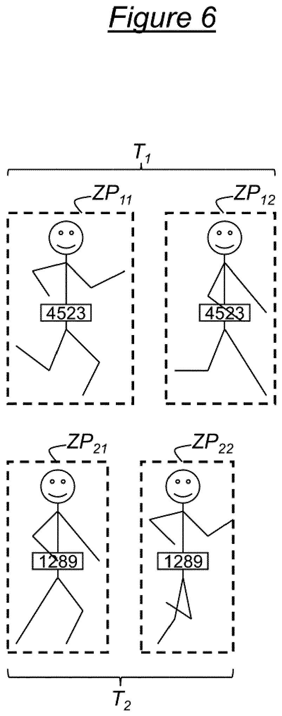

Le résultat de l'étape 308 dans l'exemple développé est illustré sur la figure 6. Plus précisément, les moyens de construction de segments de course 206 fournissent un premier segment de course T₁ regroupant les zones de participant ZP₁₁, ZP₁₂ entourant le premier participant 106₁ et un deuxième segment de course T₂ regroupant les zones de personne ZP₂₁, ZP₂₂ entourant le deuxième participant 106₂.

De retour à la figure 3, les étapes suivantes 310 à 328 sont mises en oeuvre pour chaque segment de course T, pour identifier la personne de ce segment de course T à partir des zones de personne ZP de ce segment de course T.

Au cours d'une étape 310, pour chaque zone de personne ZP du segment de course T, les moyens de localisation de numéro 208, pour chaque zone de personne ZP du segment de course T, recherchent au moins un numéro N° présent dans la zone de personne ZP, et plus précisément dans le contenu de cette zone de personne ZP, et définissent, dans la zone de personne ZP, pour chaque numéro N° trouvé, une zone de numéro ZN entourant ce numéro N°.

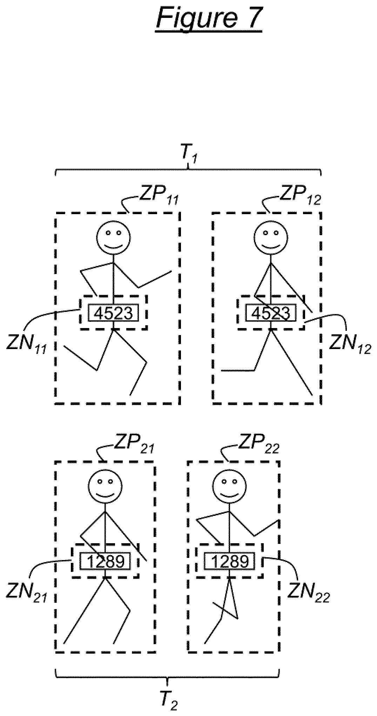

Le résultat de l'étape 310 dans l'exemple développé est illustré sur la figure 7. Plus précisément, pour le segment de course T₁, les moyens de localisation de numéro 208 détectent un numéro dans chaque zone de personne ZP₁₁, ZP₁₂ et définissent, dans respectivement ces deux zones de personne ZP₁₁, ZP₁₂, les zones de numéro ZN₁₁, ZN₁₂. De même, pour le segment de course T₂, les moyens de localisation de numéro 208 détectent un numéro dans chaque zone de personne ZP₂₁, ZP₂₂ et définissent, dans respectivement ces deux zones de personne ZP₂₁, ZP₂₂, les zones de numéro ZN₂₁, ZN₂₂.

De retour à la figure 3, au cours d'une étape 312, pour chaque zone de numéro ZN du segment de course T, les moyens de reconnaissance de numéro 210 reconnaissent le numéro N° présent dans la zone de numéro ZN et évaluent la fiabilité de la reconnaissance.

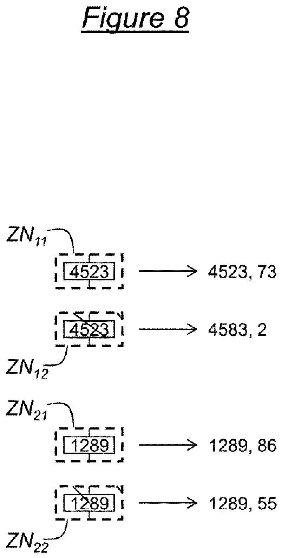

Le résultat de l'étape 312 dans l'exemple développé est illustré sur la figure 8. Plus précisément, pour le segment de course T₁, les moyens de reconnaissance de numéro 210 reconnaissent le numéro 4523 dans la zone de numéro ZN₁₁ avec une fiabilité de 73 et le numéro 4583 dans la zone de numéro ZN₁₂ avec une fiabilité de 2. Pour le segment de course T₂, les moyens de reconnaissance de numéro 210 reconnaissent le numéro 1289 dans la zone de numéro ZN₁₁, avec une fiabilité de 86 et le numéro 1289 dans la zone de numéro ZN₂₂, avec une fiabilité de 55.

De retour à la figure 3, au cours d'une étape 314, les moyens de sélection de numéro 212 sélectionnent l'un des numéros N° reconnus à partir des fiabilités associées à ces numéros N° reconnus.

Dans l'exemple développé où un filtrage préalable est prévu, le seuil prédéfini pour le filtrage des numéros vaut 5. Ainsi, pour le segment de course T₁, le numéro 4583 de la zone de numéro ZN₁₂ présente une fiabilité inférieur au seuil prédéfini et est donc filtré par les moyens de sélection de numéro 212. Il ne reste alors plus que le numéro 4523 de la zone de numéro ZN₁₁ qui est donc sélectionné par les moyens de sélection de numéro 212. Pour le segment de course T₂, les deux numéros 1289 des zones de numéros ZN₂₁, ZN₂₂ sont fiables et ne sont donc pas filtrés par les moyens de sélection de numéro 212. Ces deux numéros ont en outre la même valeur, 1289. Ainsi, les moyens de sélection de numéro 212 combinent les fiabilités de ces deux numéros, par exemple en prenant leur moyenne, qui vaut 70,5. Pour montrer un exemple de sélection parmi plusieurs numéros différents, on suppose que le segment de course T₁ comporte en outre les deux images précédant les images I₁, I₂, que ces deux images contiennent également le deuxième participant 106₂ et que ces deux images donnent respectivement lieu aux deux prédictions de numéro suivantes : 7289 avec une fiabilité de 70 et 7289 avec une fiabilité de 50. La combinaison (moyenne dans l'exemple décrit) des fiabilités des numéros ayant la valeur 7289 est donc de 60. Ainsi, dans cet exemple, la valeur 1289 est celle dont la combinaison des fiabilités des numéros ayant cette valeur est la plus élevée et le numéro 1289 est donc sélectionné par les moyens de sélection de numéro 212.

Au cours d'une étape 316, les moyens de récupération de nom 216 recherchent, parmi les numéros d'identification prédéfinis de la base de données 214, le numéro N° sélectionné à l'étape 314 et récupèrent le nom N associé.

Parallèlement aux étapes 310 à 316, les étapes suivantes 318 à 328 sont mises en oeuvre.

Au cours d'une étape 318, pour chaque zone de personne ZP du segment de course T, les moyens de détermination de signature visuelle 220 déterminent, à partir du contenu de cette zone de personne ZP, une signature visuelle locale S de la personne présente dans la zone de personne ZP et associent chaque signature visuelle locale S à une fiabilité.

Au cours d'une étape 320, les moyens de détermination de signature visuelle agrégée 222 déterminent une signature visuelle agrégée S_{A} à partir des signatures visuelles S de la personne des zones de personne ZP du segment de course T et de leurs fiabilités associées.

Au cours d'une étape 322, les moyens de détermination de signature visuelle agrégée 222 vérifient si la personne du segment de course T a pu être identifiée par un numéro porté par cette personne. Par exemple, les moyens de détermination de signature visuelle agrégée 222 vérifient si un numéro N° a pu être sélectionné à l'étape 314 et/ou si un des numéros d'identification de la base de données 214 a été trouvé à l'étape 316, permettant de récupérer un nom N.

Si c'est le cas, au cours d'une étape 324, les moyens de détermination de signature visuelle agrégée 222 enregistrent la signature visuelle agrégée S_{A} dans la base de données 214 et l'associent au nom de personne N (et au numéro N° associé) récupéré par les moyens de récupération de nom 216. La signature visuelle agrégée S_{A} devient alors une signature visuelle de référence S_{R} représentant la personne ayant le nom N, et venant compléter les signatures visuelles de référence déjà présentes dans la base de données 214, par exemple celles enregistrées avant la course ou bien celles obtenues pendant la course.

Sinon, au cours d'une étape 326, les moyens de détermination de signature visuelle agrégée 222 fournissent cette signature visuelle agrégée S_{A} aux moyens de récupération de nom 216.

Au cours d'une étape 328, la personne du segment de course T est identifiée à partir de la signature visuelle agrégée S_{A}. Pour cela, les moyens de récupération de nom 216 déterminent, parmi les numéros N° prédéfinis de la base de données 214, celui associé à une ou plusieurs signatures visuelles de référence S_{R} présentant une distance avec la signature visuelle agrégée S_{A} inférieure à un seuil prédéfini et récupèrent le nom de personne N associé à ce numéro N°. Dans le cas où un numéro N° est associé à plusieurs signatures visuelles de référence S_{R}, la distance de la signature visuelle agrégée S_{A} à ces signatures visuelles de référence S_{R} est par exemple une moyenne des distances respectives entre la signature visuelle agrégée S_{A} et les signatures visuelles de référence S_{R}. Ainsi, si le numéro N° est associé à deux signatures visuelles de référence S_{R}, la distance de la signature visuelle agrégée S_{A} à ces deux signatures visuelles de référence S_{R} est une moyenne de la distance de la signature visuelle agrégée S_{A} à la première signature visuelle de référence S_{R} et de la distance de la signature visuelle agrégée S_{A} à la deuxième signature visuelle de référence S_{R}. Si un numéro N° est trouvé, les moyens de détermination de signature visuelle agrégée 222 enregistrent la signature visuelle agrégée S_{A} dans la base de données 214 et l'associent au nom de personne N (et au numéro N° associé) récupéré par les moyens de récupération de nom 216.

Parallèlement aux étapes 310 à 316 et aux étapes 318 à 328, les étapes suivantes 330 à 334 sont mises en oeuvre.

Au cours d'une étape 330, les moyens de sélection de ligne 226 reçoivent, avec le flux vidéo F reçu, un identifiant ID de la caméra 110 envoyant ce flux vidéo F et sélectionnent la ligne L représentant la ligne de passage 104 associée à la caméra 110 ayant cet identifiant ID.

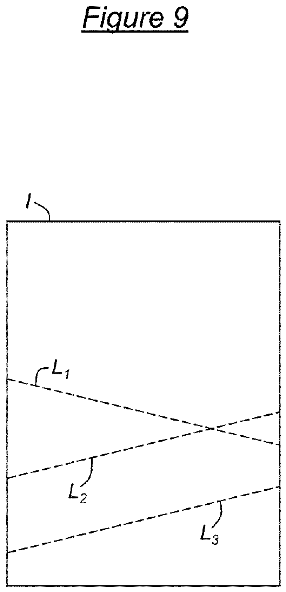

La figure 9 illustre, dans le cadre de l'exemple développé, trois lignes L₁, L₂, L₃ associées à respectivement trois caméras 110. Dans cet exemple, les moyens de sélection de ligne 226 sélectionnent la ligne L₃.

De retour à la figure 3, au cours d'une étape 332, les moyens de détection de franchissement 228 déterminent, parmi les zones de personne ZP de chaque segment de course T, celle franchissant la première, dans un sens prédéfini, la ligne L sélectionnée, c'est-à-dire celle dont la place occupée est traversée la première par la ligne L, tandis que la place occupée par la zone de personne de l'image ZP précédente dans le segment de course était (entièrement) d'un côté prédéfini de la ligne L (par exemple du côté amont de la ligne L).

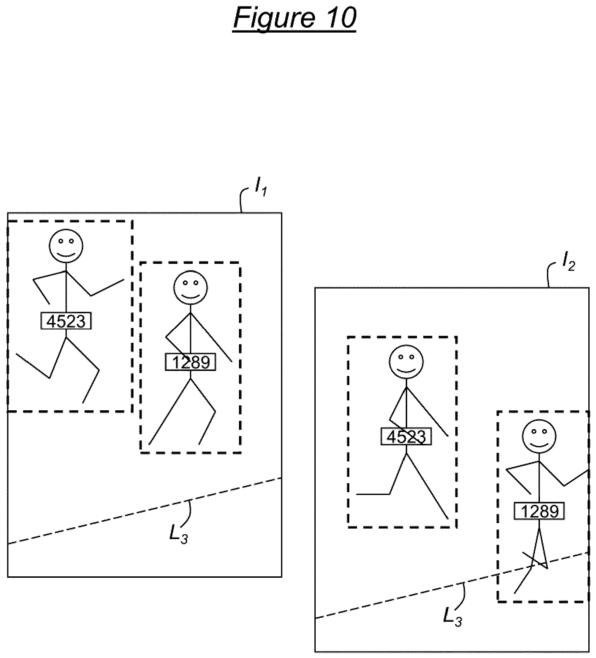

En référence à la figure 10, dans l'exemple développé, pour le deuxième participant 106₂, la zone de personne ZP₂₂ de l'image I₂ est la première à franchir la ligne L₃ sélectionnée. Plus précisément, la zone de personne ZP₂₁ de l'image I₁ est (entièrement) dans la partie amont de l'image I₁ tandis qu'une portion de la zone de personne ZP₂₂ de l'image I₂ est dans la partie aval de l'image I₂.

De retour à la figure 3, au cours d'une étape 334, les moyens de détection de franchissement 228 déterminent un instant D de franchissement de la ligne L à partir d'un instant associé à l'image I contenant la zone de personne ZP franchissant la première la ligne. L'instant de franchissement D pourrait être déterminé en outre à partir d'un instant associé à l'image précédente.

Dans l'exemple développé, l'instant de franchissement D est pris égal à l'instant de conversion de l'image I₂ à l'étape 304. Alternativement, l'instant de franchissement D pourrait être un instant intermédiaire entre l'instant associé à l'image I₂ et l'instant associé à l'image I₁.

Au cours d'une étape 336, les moyens de modification d'image 230 ajoutent le nom N fourni par les moyens de récupération de nom 216 et l'instant de franchissement D fourni par les moyens de détection de franchissement 228 dans au moins certaines des images I contenant les zones de personne ZP formant le segment de course T à partir duquel ce nom N et cet instant de franchissement D ont été déterminés.

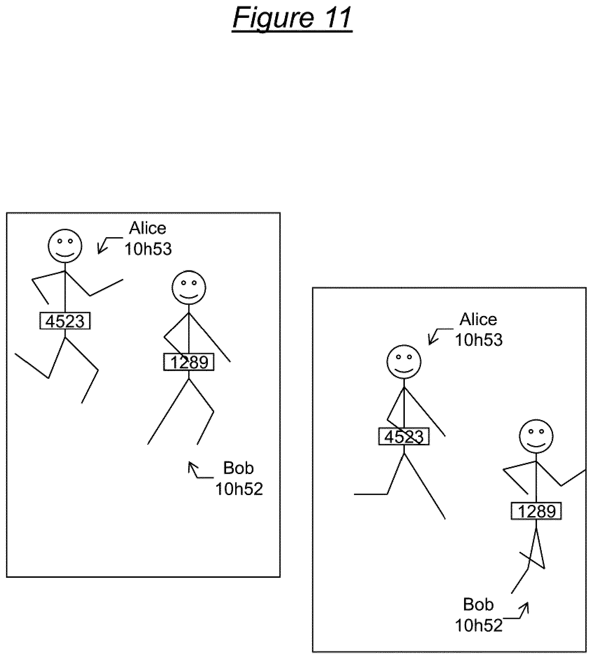

Les deux images modifiées I*₁, I*₂ obtenues à l'étape 336 dans l'exemple développé sont illustrées sur la figure 11.

Au cours d'une étape 338, les moyens de reconstitution de flux vidéo 232 construisent un flux vidéo reconstitué F* à partir des images modifiées I* par les moyens de modification d'image 230 et des images I non modifiées du flux vidéo F d'origine.

Il apparaît clairement qu'un procédé d'identification de personne dans une vidéo tel que celui décrit précédemment permet d'exploiter les similitudes entre des images successives pour améliorer la reconnaissance d'une personne, comme un participant à une compétition sportive.

Il sera en outre apprécié que chacun des éléments 202 à 232 décrits précédemment peut être implémenté de manière matérielle, par exemple par des fonctions micro programmées ou micro câblées dans des circuits intégrés dédiés (sans programme d'ordinateur), et/ou de manière logicielle, par exemple par un ou plusieurs programmes d'ordinateur destinés à être exécutés par un ou plusieurs ordinateurs comportant chacun, d'une part, une ou plusieurs mémoires pour le stockage de fichiers de données et d'un ou plusieurs de ces programmes d'ordinateurs et, d'autre part, un ou plusieurs processeurs associés cette ou ces mémoires et destinés à exécuter les instructions du ou des programmes d'ordinateur stockés dans la ou les mémoire de cet ordinateur.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

Par exemple, les éléments 202 à 232 pourraient être répartis entre plusieurs ordinateurs. Ils pourraient être même répliqués dans ces ordinateurs. Par exemple, on pourrait prévoir un ordinateur pour chaque caméra. Dans ce cas, chaque ordinateur reprendrait les éléments du dispositif 112, sauf l'entrée d'un identifiant ID de la caméra et les moyens de sélection de ligne 226, qui seraient inutiles puisque cet ordinateur ne considèrerait que la ligne associée à la caméra à laquelle il est relié. Dans ce cas, les différents ordinateurs sont de préférence synchronisés entre eux afin qu'ils déterminent des instants de passage cohérents d'une caméra à l'autre. Le protocole NTP (de l'anglais « Network Time Protocol ») est par exemple utilisé.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué dans la limite des revendications.

## Revendications

1. Procédé d'identification d'une personne dans une vidéo, par une signature visuelle de cette personne, le procédé étant mis en oeuvre par ordinateur et comportant :
- pour chacune d'une pluralité d'images (I, I₁, I₂) successives d'un flux vidéo (F) d'une caméra (110), la recherche (306) d'au moins une personne (106, 106₁, 106₂) présente dans l'image (I, I₁, I₂) et la définition (306), dans l'image (I, I₁, I₂), pour chaque personne (106, 106₁, 106₂) trouvée, d'une zone, dite zone de personne (ZP, ZP₁₁, ZP₁₂, ZP₂₁, ZP₂₂), entourant au moins en partie cette personne (106, 106₁, 106₂) ;
- pour chacune d'au moins une personne (106, 106₁, 106₂) trouvée, le regroupement en un segment de course (T, T₁, T₂) de plusieurs zones de personne (ZP, ZP₁₁, ZP₁₂, ZP₂₁, ZP₂₂) issues d'images (I, I₁, I₂) successives et entourant au moins en partie cette même personne (106, 106₁, 106₂) ;
- pour chaque segment de course (T, T₁, T₂), l'identification de la personne de ce segment de course (T, T₁, T₂), par une signature visuelle de cette personne, cette identification comportant :
• pour chaque zone de personne (ZP, ZP₁₁, ZP₁₂, ZP₂₁, ZP₂₂) du segment de course (T, T₁, T₂), la détermination (318) d'une signature visuelle de la personne (106, 106₁, 106₂) de ce segment de course (T, T₁, T₂), dite signature visuelle locale (S),
le procédé d'identification étant **caractérisé en ce que**, pour chaque segment de course (T, T₁, T₂), l'identification de la personne de ce segment de course (T, T₁, T₂), par une signature visuelle de cette personne comporte, en outre :
• la détermination (320) d'une signature visuelle agrégée (S_{A}) à partir des signatures visuelles locales (S), et
• l'identification de la personne (106, 106₁, 106₂) de ce segment de course (T, T₁, T₂) à partir de la signature visuelle agrégée (S_{A}).

2. Procédé selon la revendication 1, dans lequel la signature visuelle agrégée (S_{A}) est une moyenne des signatures visuelles locales (S) de la personne (106, 106₁, 106₂).

3. Procédé selon la revendication 1 ou 2, comportant en outre, pour chaque détermination (318) d'une signature visuelle locale (S), l'évaluation d'une fiabilité de cette signature visuelle locale (S) et dans lequel la signature visuelle agrégée (S_{A}) est déterminée à partir, en plus des signatures visuelles locales (S), de leurs fiabilités associées.

4. Procédé selon l'une quelconque des revendications 1 à 3, comportant en outre, pour chaque segment de course (T, T₁, T₂) :
- pour chaque zone de personne (ZP, ZP₁₁, ZP₁₂, ZP₂₁, ZP₂₂) du segment de course (T, T₁, T₂), la recherche (310) d'au moins un numéro présent dans la zone de personne (ZP, ZP₁₁, ZP₁₂, ZP₂₁, ZP₂₂) et la définition, dans la zone de personne (ZP, ZP₁₁, ZP₁₂, ZP₂₁, ZP₂₂), pour chaque numéro (N°) trouvé, d'une zone, dite zone de numéro (ZN, ZN₁₁, ZN₁₂, ZN₂₁, ZN₂₂), entourant ce numéro ;
- pour chaque zone de numéro (ZN, ZN₁₁, ZN₁₂, ZN₂₁, ZN₂₂) du segment de course (T, T₁, T₂), la reconnaissance (312) du numéro (N°) présent dans la zone de numéro (ZN, ZN₁₁, ZN₁₂, ZN₂₁, ZN₂₂) et, pour chaque numéro (N°) reconnu, l'évaluation d'une fiabilité de la reconnaissance ;
- la sélection (314) d'un des numéros (N°) reconnus à partir des fiabilités de ces numéros (N°) reconnus ; et
- la recherche (316) du numéro (N°) sélectionné parmi un ensemble de numéros d'identification prédéfinis identifiant des personnes (106, 106₁, 106₂) respectives ;
et dans lequel l'identification de la personne de ce segment de course (T, T₁, T₂), par une signature visuelle de cette personne est réalisée si la personne n'a pas pu être identifiée par un numéro d'identification.

5. Procédé selon la revendication 4, dans lequel la sélection (314) d'un des numéros (N°) reconnus à partir des fiabilités associées à ces numéros (N°) comporte :
- le filtrage de chaque numéro (N°) dont la fiabilité est inférieure à un seuil prédéfini ; et
- la sélection d'un des autres numéros (N°), dits numéros fiables, à partir de leurs fiabilités associées.

6. Procédé selon la revendication 5, dans lequel la sélection d'un des numéros (N°) fiables à partir de leurs fiabilités associées comporte la sélection, parmi les valeurs des numéros (N°) fiables, de celle dont une combinaison, comme la somme ou bien la moyenne, des fiabilités des numéros ayant cette valeur est la plus élevée, et dans lequel le numéro (N°) sélectionné est celui ayant cette valeur.

7. Procédé selon l'une quelconque des revendications 4 à 6, dans lequel l'identification (328) de la personne du segment de course (T, T₁, T₂) à partir de la signature visuelle agrégée (S_{A}) comporte :
- la détermination, parmi les numéros d'identification prédéfinis, de celui associé à une ou plusieurs signatures visuelles de référence (S_{R}) présentant une distance avec la signature visuelle agrégée (S_{A}) inférieure à un seuil prédéfini.

8. Procédé selon l'une quelconque des revendications 1 à 7, comportant en outre, pour chaque segment de course (T, T₁, T₂) :
- la détermination (332), parmi les zones de personne (ZP, ZP₁₁, ZP₁₂, ZP₂₁, ZP₂₂) du segment de course (T, T₁, T₂), de celle franchissant la première, dans un sens prédéfini, une ligne (L, L₁, L₂, L₃) ayant une position fixe et prédéfinie dans les images (I, I₁, I₂) ; et
- la détermination (334) d'un instant de franchissement (D) de la ligne (L, L₁, L₂, L₃) à partir d'un instant associé à l'image (I, I₁, I₂) contenant la zone de personne (ZP, ZP₁₁, ZP₁₂, ZP₂₁, ZP₂₂) franchissant la première la ligne (L, L₁, L₂, L₃).

9. Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé selon l'une quelconque des revendications 1 à 8, lorsque ledit programme est exécuté sur un ordinateur.

10. Dispositif (112) d'identification d'une personne (106, 106₁, 106₂) dans une vidéo, par une signature visuelle de cette personne, comportant :
- des moyens (204) conçus, pour chacune d'une pluralité d'images (I, I₁, I₂) successives d'un flux vidéo (F) d'une caméra (110), pour rechercher au moins une personne (106, 106₁, 106₂) présente dans l'image (I, I₁, I₂) et définir, dans l'image (I, I₁, I₂), pour chaque personne (106, 106₁, 106₂) trouvée, une zone, dite zone de personne (ZP, ZP₁₁, ZP₁₂, ZP₂₁, ZP₂₂), entourant au moins en partie cette personne (106, 106₁, 106₂) ;
- des moyens (206) conçus, pour chacune d'au moins une personne (106, 106₁, 106₂) trouvée, pour regrouper en un segment de course (T, T₁, T₂) plusieurs zones de personne (ZP, ZP₁₁, ZP₁₂, ZP₂₁, ZP₂₂) issues d'images (I, I₁, I₂) successives et entourant au moins en partie cette même personne (106, 106₁, 106₂) ;
- des moyens conçus, pour chaque segment de course (T, T₁, T₂), pour identifier la personne de ce segment de course, par une signature visuelle de cette personne, ces moyens comportant :
• des moyens (208) conçus, pour chaque zone de personne (ZP, ZP₁₁, ZP₁₂, ZP₂₁, ZP₂₂) du segment de course (T, T₁, T₂), pour déterminer (318) une signature visuelle (S) de la personne (106, 106₁, 106₂) présente dans la zone de personne (ZP, ZP₁₁, ZP₁₂, ZP₂₁, ZP₂₂) de ce segment de course (T, T₁, T₂), dite signature visuelle locale (S) ;
le dispositif (112) étant **caractérisé en ce que** lesdits moyens conçus, pour chaque segment de course (T, T₁, T₂), pour identifier la personne de ce segment de course, par une signature visuelle de cette personne, comportent, en outre :
• des moyens conçus pour déterminer une signature visuelle agrégée (S_{A}) à partir des signatures visuelles locales (S) ; et
• des moyens conçus pour identifier la personne (106, 106₁, 106₂) de ce segment de course (T, T₁, T₂) à partir de la signature visuelle agrégée (S_{A}).

## Patentansprüche

1. Verfahren zum Identifizieren einer Person in einem Video anhand einer visuellen Signatur dieser Person, wobei das Verfahren computergestützt ausgeführt wird, umfassend:
- die Suche (306), für jede einer Vielzahl von aufeinanderfolgenden Bildern (I, I₁, I₂) eines Videostreams (F) von einer Kamera (110), nach mindestens einer Person (106, 106₁, 106₂), die im Bild (I, I₁, I₂) vorhanden ist, und die Definition (306) im Bild (I, I₁, I₂) für jede gefundene Person (106, 106₁, 106₂) einer Zone, die als Personenzone (ZP, ZP₁₁, ZP₁₂, ZP₂₁, ZP₂₂) bezeichnet wird, die diese Person (106, 106₁, 106₂) zumindest teilweise umgibt;
- für jede der mindestens einen gefundenen Person (106, 106₁, 106₂), die Umgruppierung in eine Wegstrecke (T, T₁, T₂) aus mehreren Personenzonen (ZP, ZP₁₁, ZP₁₂, ZP₂₁, ZP₂₂), die aus aufeinanderfolgenden Bildern (I, I₁, I₂) hervorgehen und zumindest teilweise dieselbe Person (106, 106₁, 106₂) umgeben;
- für jede Wegstrecke (T, T₁, T₂), die Identifizierung der Person dieser Wegstrecke (T, T₁, T₂), durch eine visuelle Signatur dieser Person, wobei diese Identifizierung umfasst:
• für jede Personenzone (ZP, ZP₁₁, ZP₁₂, ZP₂₁, ZP₂₂) der Wegstrecke (T, T₁, T₂), die Bestimmung (318) einer visuellen Signatur der Person (106, 106₁, 106₂) dieser Wegstrecke (T, T₁, T₂), die als lokale visuelle Signatur (S) bezeichnet wird,
wobei das Identifizierungsverfahren **dadurch gekennzeichnet ist, dass** für jede Wegstrecke (T, T₁, T₂) die Identifizierung der Person dieser Wegstrecke (T, T₁, T₂) durch eine visuelle Signatur dieser Person ferner umfasst:
• die Bestimmung (320) einer aggregierten visuellen Signatur (S_{A}) anhand der lokalen visuellen Signaturen (S) und
• die Identifizierung der Person (106, 106₁, 106₂) dieser Wegstrecke (T, T₁, T₂) anhand der aggregierten visuellen Signatur (S_{A}).

2. Verfahren nach Anspruch 1, wobei die aggregierte visuelle Signatur (S_{A}) ein Durchschnitt der lokalen visuellen Signaturen (S) der Person (106, 106₁, 106₂) ist.

3. Verfahren nach Anspruch 1 oder 2, ferner umfassend, für jede Bestimmung (318) einer lokalen visuellen Signatur (S), die Bewertung einer Zuverlässigkeit dieser lokalen visuellen Signatur (S) und wobei die aggregierte visuelle Signatur (SA) zusätzlich zu den lokalen visuellen Signaturen (S) anhand ihrer zugeordneten Zuverlässigkeiten bestimmt wird.

4. Verfahren nach einem der Ansprüche 1 bis 3, ferner umfassend, für jede Wegstrecke (T, T₁, T₂):
- für jede Personenzone (ZP, ZP₁₁, ZP₁₂, ZP₂₁, ZP₂₂) der Wegstrecke (T, T₁, T₂), die Suche (310) nach mindestens einer Nummer, die in der Personenzone (ZP, ZP₁₁, ZP₁₂, ZP₂₁, ZP₂₂) vorhanden ist, und die Definition in der Personenzone (ZP, ZP₁₁, ZP₁₂, ZP₂₁, ZP₂₂), für jede gefundene Nummer (N°), einer Zone, die als Nummernzone (ZN, ZN₁₁, ZN₁₂, ZN₂₁, ZN₂₂) bezeichnet wird, die diese Nummer umgibt;
- für jede Nummernzone (ZN, ZN₁₁, ZN₁₂, ZN₂₁, ZN₂₂) der Wegstrecke (T, T₁, T₂), die Erkennung (312) der in der Nummernzone (ZN, ZN₁₁, ZN₁₂, ZN₂₁, ZN₂₂) vorhandenen Nummer (N°) und, für jede erkannte Nummer (N°), die Bewertung einer Zuverlässigkeit der Erkennung;
- die Auswahl (314) einer der erkannten Nummern (N°) anhand der Zuverlässigkeiten dieser erkannten Nummern (N°); und
- die Suche (316) nach der ausgewählten Nummer (N°) aus einer Reihe vordefinierter Identifikationsnummern, die jeweilige Personen (106, 106₁, 106₂) identifizieren;
und wobei die Identifizierung der Person dieser Wegstrecke (T, T₁, T₂) durch eine visuelle Signatur dieser Person erfolgt, wenn die Person nicht anhand einer Identifikationsnummer identifiziert werden konnte.

5. Verfahren nach Anspruch 4, wobei die Auswahl (314) einer der anhand der diesen Nummern (N°) zugeordneten Zuverlässigkeiten erkannten Nummern (N°) umfasst:
- das Filtern jeder Nummer (N°), deren Zuverlässigkeit unter einem vordefinierten Schwellenwert liegt; und
- die Auswahl einer der anderen Nummern (N°), die als zuverlässige Nummern bezeichnet werden, anhand ihrer zugeordneten Zuverlässigkeiten.

6. Verfahren nach Anspruch 5, wobei die Auswahln einer der zuverlässigen Nummern (N°) anhand ihrer zugeordneten Zuverlässigkeiten die Auswahl derjenigen Nummer aus den Werten der zuverlässigen Nummern (N°) umfasst, deren Kombination, beispielsweise die Summe oder auch das Mittel, der Zuverlässigkeiten der Nummern mit diesem Wert am höchsten ist, und wobei die ausgewählte Nummer (N°) diejenige mit diesem Wert ist.

7. Verfahren nach einem der Ansprüche 4 bis 6, wobei die Identifizierung (328) der Person der Wegstrecke (T, T₁, T₂) anhand der aggregierten visuellen Signatur (S_{A}) umfasst:
- die Bestimmung, aus den vordefinierten Identifikationsnummern, derjenigen, die einer oder mehreren visuellen Referenzsignaturen (S_{R}) zugeordnet ist, die eine Distanz zu der aggregierten visuellen Signatur (S_{A}) aufweist, die unter einem vordefinierten Schwellenwert liegt.

8. Verfahren nach einem der Ansprüche 1 bis 7, ferner umfassend, für jede Wegstrecke (T, T₁, T₂):
- die Bestimmung (332), aus den Personenzonen (ZP, ZP₁₁, ZP₁₂, ZP₂₁, ZP₂₂) der Wegstrecke (T, T₁, T₂), von derjenigen, die in einer vordefinierten Richtung eine Linie (L, L₁, L₂, L₃), die eine festgelegte und in den Bildern (I, I₁, I₂) vordefinierte Position aufweist, als erste überschreitet; und
- die Bestimmung (334) eines Zeitpunkts des Überschreitens (D) der Linie (L, L₁, L₂, L₃) anhand eines Zeitpunkts, der dem Bild (I, I₁, I₂) zugeordnet ist, das die Personenzone (ZP, ZP₁₁, ZP₁₂, ZP₂₁, ZP₂₂) enthält, die die Linie (L, L₁, L₂, L₃) als erstes überschreitet.

9. Computerprogramm, das von einem Kommunikationsnetz herunterladbar ist und/oder auf einem Träger abgespeichert ist, der durch einen Computer lesbar und/oder durch einen Prozessor ausführbar ist, **dadurch gekennzeichnet, dass** es Anweisungen für die Ausführung der Schritte eines Verfahrens nach einem der Ansprüche 1 bis 8 umfasst, wenn das Programm auf einem Computer ausgeführt wird.

10. Vorrichtung (112) zum Identifizieren einer Person (106, 106₁, 106₂) in einem Video durch eine visuelle Signatur dieser Person, umfassend:
- Mittel (204), die dazu gestaltet sind, für jede einer Vielzahl von aufeinanderfolgenden Bildern (I, I₁, I₂) eines Videostreams (F) von einer Kamera (110), nach mindestens einer Person (106, 106₁, 106₂) zu suchen, die im Bild (I, I₁, I₂) vorhanden ist, und im Bild (I, I₁, I₂) für jede gefundene Person (106, 106₁, 106₂) eine Zone zu definieren, die als Personenzone (ZP, ZP₁₁, ZP₁₂, ZP₂₁, ZP₂₂) bezeichnet wird, die diese Person (106, 106₁, 106₂) zumindest teilweise umgibt;
- Mittel (206), die dazu gestaltet sind, für jede der mindestens einen gefundenen Person (106, 106₁, 106₂), mehrere Personenzonen (ZP, ZP₁₁, ZP₁₂, ZP₂₁, ZP₂₂), die aus aufeinanderfolgenden Bildern (I, I₁, I₂) hervorgehen und zumindest teilweise dieselbe Person (106, 106₁, 106₂) umgeben, in eine Wegstrecke (T, T₁, T₂) umzugruppieren;
- Mittel, die dazu gestaltet sind, für jede Wegstrecke (T, T₁, T₂) die Person dieser Wegstrecke durch eine visuelle Signatur dieser Person zu identifizieren, wobei diese Mittel umfassen:
• Mittel (208), die dazu gestaltet sind, für jede Personenzone (ZP, ZP₁₁, ZP₁₂, ZP₂₁, ZP₂₂) der Wegstrecke (T, T₁, T₂) eine visuelle Signatur (S) der Person (106, 106₁, 106₂) zu bestimmen (318), die in der Personenzone (ZP, ZP₁₁, ZP₁₂, ZP₂₁, ZP₂₂) dieser Wegstrecke (T, T₁, T₂) vorhanden ist, die als lokale visuelle Signatur (S) bezeichnet wird;
wobei die Vorrichtung (112) **dadurch gekennzeichnet ist, dass** die Mittel, die dazu gestaltet sind, für jede Wegstrecke (T, T₁, T₂) die Person dieser Wegstrecke durch eine visuelle Signatur dieser Person zu identifizieren, ferner umfassen:
• Mittel, die dazu gestaltet sind, eine aggregierte visuelle Signatur (S_{A}) anhand lokaler visueller Signaturen (S) zu bestimmen; und
• Mittel, die dazu gestaltet sind, die Person (106, 106₁, 106₂) dieser Wegstrecke (T, T₁, T₂) anhand der aggregierten visuellen Signatur (S_{A}) zu identifizieren.

## Claims

1. A method for identifying a person in a video, by a visual signature from that person, the method being computer-implemented and being **characterized in that** it comprises:
- for each of a plurality of successive images (I, I₁, I₂) of a video stream (F) from a camera (110), searching (306) for at least one person (106, 106₁, 106₂) present in the image (I, I₁, I₂) and defining (306), in the image (I, I₁, I₂), for each person (106, 106₁, 106₂) found, a field, called person field (ZP, ZP₁₁, ZP₁₂, ZP₂₁, ZP₂₂), at least partially surrounding that person (106, 106₁, 106₂);
- for each of at least one person (106, 106₁, 106₂) found, gathering into a track segment (T, T₁, T₂) several person fields (ZP, ZP₁₁, ZP₁₂, ZP₂₁, ZP₂₂) derived from successive images (I, I₁, I₂) and at least partially surrounding that same person (106, 106₁, 106₂);
- for each track segment (T, T₁, T₂), identifying the person **in that** track segment (T, T₁, T₂) by a visual signature from that person, this identification comprising:
• for each person field (ZP, ZP₁₁, ZP₁₂, ZP₂₁, ZP₂₂) in the track segment (T, T₁, T₂), determining (318) a visual signature from the person (106, 106₁, 106₂) **in that** track segment (T, T₁, T₂), called local visual signature (S),
• determining (320) an aggregated visual signature (S_{A}) from the local visual signatures (S), and
• identifying the person (106, 106₁, 106₂) in the track segment (T, T₁, T₂) from the aggregated visual signature (S_{A}).

2. The method of claim 1, wherein the aggregated visual signature (S_{A}) is a mean of the local visual signatures (S) of the person (106, 106₁, 106₂).

3. The method of claim 1 or 2 further comprising, for each determination (318) of a local visual signature (S), evaluating a reliability of that local visual signature (S) and wherein the aggregated visual signature (S_{A}) is determined from, additionally to the local visual signatures (S), their associated reliability.

4. The method of any one of claims 1 to 3, further comprising, for each track segment (T, T₁, T₂):
- for each person field (ZP, ZP₁₁, ZP₁₂, ZP₂₁, ZP₂₂) in the track segment (T, T₁, T₂), searching (310) for at least one number present in the person field (ZP, ZP₁₁, ZP₁₂, ZP₂₁, ZP₂₂) and defining, in the person field (ZP, ZP₁₁, ZP₁₂, ZP₂₁, ZP₂₂), for each number (N°) found, a field, called number field (ZN, ZN₁₁, ZN₁₂, ZN₂₁, ZN₂₂), surrounding that number;
- for each number field (ZN, ZN₁₁, ZN₁₂, ZN₂₁, ZN₂₂) in the track segment (T, T₁, T₂), recognizing (312) the number (N°) present in the number field (ZN, ZN₁₁, ZN₁₂, ZN₂₁, ZN₂₂) and, for each number (N°) recognized, evaluating a reliability of the recognition;
- selecting (314) one of the recognized numbers (N°) from the reliability of those recognized numbers (N°); and
- searching (316) for the number (N°) selected from a set of predefined identification numbers identifying respective persons (106, 106₁, 106₂); and wherein the identification of the person in said track segment (T, T₁, T₂) by a visual signature from that person is carried out if the person could not be identified by an identification number.

5. The method of claim 4, wherein the selection (314) of one of the numbers (N°) recognized from the reliability associated with these numbers (N°) comprises:
- filtering each number (N°) whose reliability is less than a predefined threshold; and
- selecting one of the other numbers (N°), called reliable numbers, from their associated reliability.

6. The method of claim 5, wherein selecting one of the reliable numbers (N°) from their associated reliability comprises selecting, from among the values of the reliable numbers (N°), the one of which a combination, such as the sum or the mean, of the reliability of the numbers having that value is the highest, and wherein the number (N°) selected is that having that value.

7. The method of any of claims 4 to 6, wherein identifying (328) the person in the track segment (T, T₁, T₂) from the aggregated visual signature (S_{A}) comprises:
- determining, among the predefined identification numbers, the one associated with one or more reference visual signatures (S_{R}) having a distance from the aggregated visual signature (S_{A}) less than a predefined threshold.

8. The method of any one of claims 1 to 7, further comprising, for each track segment (T, T₁, T₂):
- determining (332), among the person fields (ZP, ZP₁₁, ZP₁₂, ZP₂₁, ZP₂₂) in the track segment (T, T₁, T₂), which one first crosses, in a predefined direction, a line (L, L₁, L₂, L₃) having a fixed and predefined position in the images (I, I₁, I₂), and
- determining (334) a crossing instant (D) of crossing the line (L, L₁, L₂, L₃) from an instant associated with the image (I, I₁, I₂) containing the person field (ZP, ZP₁₁, ZP₁₂, ZP₂₁, ZP₂₂) crossing the line (L, L₁, L₂, L₃) first.

9. A computer program, downloadable from a communication network and/or recorded on a medium readable by computer and/or executable by a processor, **characterized in that** it comprises instructions for the execution of the steps of a method according to any of claims 1 to 8, when said program is executed on a computer.

10. A device (112) for identifying a person (106, 106₁, 106₂) in a video, by a visual signature from that person, **characterized in that** it comprises:
- means (204) designed, for each of a plurality of successive images (I, I₁, I₂) of a video stream (F) from a camera (110), for searching for at least one person (106, 106₁, 106₂) present in the image (I, I₁, I₂) and defining, in the image (I, I₁, I₂), for each person (106, 106₁, 106₂) found, a field, called person field (ZP, ZP₁₁, ZP₁₂, ZP₂₁, ZP₂₂), at least partially surrounding that person (106, 106₁, 106₂);
- means (206) designed, for each of at least one person (106, 106₁, 106₂) found, for gathering into a track segment (T, T₁, T₂) several person fields (ZP, ZP₁₁, ZP₁₂, ZP₂₁, ZP₂₂) derived from successive images (I, I₁, I₂) and at least partially surrounding that same person (106, 106₁, 106₂);
- means designed, for each track segment (T, T₁, T₂), for identifying the person **in that** track segment by a visual signature from that person, these means comprising:
• means (208) designed, for each person field (ZP, ZP₁₁, ZP₁₂, ZP₂₁, ZP₂₂) in the track segment (T, T₁, T₂), for determining (318) a visual signature (S) of the person (106, 106₁, 106₂) present in the person field (ZP, ZP₁₁, ZP₁₂, ZP₂₁, ZP₂₂) **in that** track segment (T, T₁, T₂), called local visual signature (S);
• means designed for determining an aggregated visual signature (S_{A}) from the local visual signatures (S); and
• means designed for identifying the person (106, 106₁, 106₂) **in that** track segment (T, T₁, T₂) from the aggregated visual signature (S_{A}).
